Europäisches Patentamt

European Patent Office

Office européen des brevets

(11) Veröffentlichungsnummer: **0 247 417 B1**

## EUROPÄISCHE PATENTSCHRIFT

(45) Veröffentlichungstag der Patentschrift: **11.09.91**

(51) Int. Cl.⁵: **F16H 25/24**, F16H 25/20

(21) Anmeldenummer: **87106757.5**

(22) Anmeldetag: **09.05.87**

(54) **Spindeltrieb.**

(30) Priorität: **20.05.86 DE 3616905**

(43) Veröffentlichungstag der Anmeldung:
**02.12.87 Patentblatt 87/49**

(45) Bekanntmachung des Hinweises auf die
Patenterteilung:
**11.09.91 Patentblatt 91/37**

(84) Benannte Vertragsstaaten:
**CH DE FR GB LI SE**

(56) Entgegenhaltungen:
**DE-A- 2 725 054**
**DE-A- 3 302 633**
**DE-A- 3 309 305**
**US-A- 2 482 082**

(73) Patentinhaber: **Gärtner, Robert, Dr.**
**Freiherr-vom-Stein-Strasse 8**
**W-6308 Butzbach/Hessen(DE)**

(72) Erfinder: **Gärtner, Robert, Dr.**
**Freiherr-vom-Stein-Strasse 8**
**W-6308 Butzbach/Hessen(DE)**

(74) Vertreter: **Schlagwein, Udo, Dipl.-Ing.**
**Anwaltsbüro Ruppert & Schlagwein Frankfur-**
**ter Strasse 34**
**W-6350 Bad Nauheim(DE)**

## Beschreibung

Die Erfindung bezieht sich auf einen Spindeltrieb mit einer Gewindespindel und zumindest drei die Spindel exzentrisch umgebenden, eine Spindelmutter bildende Wälzringeinheiten, die sich unter einseitigen Eingriff in das Spindelgewinde an diesem abwälzen und mit einem inneren Tragring eines Wälzlagers enteilig ausgebildet oder verbunden sind und bei der die Außenringe der Wälzlager der einzelnen Wälzringeinheiten eine gegenseitige Verbindung aufweisen und in Axialrichtung unverschiebbar durch ein Längsglied miteinander verbunden sind und der Eingriff der Wälzringeinheiten in den Gewindegang jeweils durch einen einzigen, geschlossenen, torusähnlichen Tragring mit einer dem Spindelgewindeprofil entsprechenden Querschnittsform erfolgt und die Spindelmutter ausschließlich über diese Eingriffe der Wälzringeinheiten an der Gewindespindel abgestützt ist. Ein solcher Spindeltrieb ist Gegenstand der US-A-2 482 082.

Bei dem bekannten Spindeltrieb liegen die Eingriffe der Wälzringeinheiten jeweils um 120 Grad versetzt. Das erscheint zur Aufnahme von axial auf die Gewindespindel wirkenden Kräften vorteilhaft. In der Praxis hat sich jedoch gezeigt, daß ein solcher Spindeltrieb bei höheren Drehzahlen zu Schwingungen neigt, so daß er nicht eingesetzt werden kann, wenn höhere Drehzahlen notwendig sind, was bei heutigen Spindeltrieben immer häufiger erforderlich wird.

Die DE-A-33 09 305 beschreibt auch schon einen Spindeltrieb, bei dem drei Muttern mit Gewinde jeweils in mehreren Windungen des Gewindes der Gewindespindel eingreifen. Dabei liegen diese Eingriffe innerhalb einer in Längsrichtung der Gewindespindel liegenden, gemeinsamen Wirkungsebene, wobei zumindest eine Mutter einen Eingriff hat, der zu den Eingriffen der anderen Muttern 180 Grad gegenüberliegt. Bei Spindeltrieben gemäß der DE-A-33 09 305 ergibt es sich, daß die Wege der Muttern bei konstanter Drehzahl der Gewindespindel nicht immer konstant sind. Deshalb besitzt der Spindeltrieb nur eine führende Mutter. Die äußeren Muttern sind axial verschieblich im Gehäuse gehalten und vermögen deshalb keine axialen Kräfte zu übertragen. Wenn auf der Gewindespindel nach dieser Schrift eine zentrische Kraft wirkt, dann neigt das gesamte Mutterngebilde dazu, sich zu verschwenken, weil die Gegenkraft außermittig an der Seite der Gewindespindel wirkt, wo die führende Mutter in das Gewinde eingreift. Das führt dazu, daß eine der nicht führenden Muttern gegen die Gewindespindel gedrückt wird, was zu einer Schwergängigkeit des Spindeltriebs führt.

Der Erfindung liegt die Aufgabe zugrunde, einen Spindeltrieb der eingangs genannten Art derart zu gestalten, daß eine optimale Funktion, insbesondere ein sehr ruhiger und reibungsarmer Lauf, auch bei ungünstigen Bedingungen erreichbar ist.

Diese Aufgabe wird erfindungsgemäß dadurch gelöst, daß die Eingriffe der Wälzringeinheiten in das Spindelgewinde innerhalb einer in Längsrichtung der Gewindespindel liegenden, gemeinsamen Wirkungsebene liegen, wobei zumindest eine Wälzringeinheit einen Eingriff hat, der zu den Eingriffen der anderen Wälzringeinheiten 180 Grad gegenüberliegt.

Bei einem solchen Spindeltrieb heben sich die durch die radialen Kräfte der Wälzringeinheiten erzeugten Momente und Kräfte gegenseitig auf. Dadurch arbeitet der Spindeltrieb ganz besonders reibungsarm und schwingungsfrei, wodurch er insbesondere für hohe Drehzahlen geeignet ist. Die Art der Wälzlager ist für die Erfindung unerheblich. Zur Verwirklichung der Erfindung können sehr unterschiedliche Lageranordnungen (X-Anordnung, O-Anordnung, Tandemanordnung) getroffen werden. Auch eine Kombination aus einem Axiallager und einem Radiallager für eine Wälzringeinheit ist möglich. Eine solche Wälzringeinheit würde sehr klein bauen.

Wenn besonders hohe axiale Kräfte übertragen werden sollen, dann ist es zweckmäßig, wenn gemäß einer anderen Ausgestaltung der Erfindung insgesamt vier Wälzringeinheiten vorgesehen sind, von denen die beiden mittleren Wälzringeinheiten auf einer Seite der Gewindespindel und die beiden äußeren Wälzringeinheiten auf der gegenüberliegenden Seite der Gewindespindel in das Spindelgewinde eingreifen. Diese Ausführungsform hat gegenüber der Ausführungsform mit nur drei Wälzringeinheiten den Vorteil, daß nicht eine Wälzringeinheit eine doppelt so hohe radiale Vorspannkraft erzeugen muß wie die anderen.

Wenn die Spindelmutter ein festes Gehäuse hat, dann kann die radiale Vorspannkraft der Wälzringeinheiten auf einfache Weise dadurch erzeugt werden, daß eine Feder vorgesehen wird, welche sich einerseits auf der mittleren Wälzringeinheit oder den mittleren Wälzringeinheiten, andererseits gegen die Verbindung der Außenringe aller Wälzringeinheiten abstützt.

Auf separate Federn kann bei der Spindelmutter jedoch gänzlich verzichtet werden, wenn die Verbindung der Außenringe durch zumindest ein die Wälzringeinheiten mit ihrem jeweiligen Eingriff in das Spindelgewinde einpressendes Längsstück aus gehärtetem Federstahl gebildet ist.

Wenn besonders hohe seitliche Kräfte zu erwarten sind, die nicht in Richtung der Eingriffe verlaufen, dann ist es gemäß einer weiteren Ausgestaltung der Erfindung vorteilhaft, mehrere Spindelmuttern mit den vorgenannten Merkmalen vorzusehen, welche im Hinblick auf ihre radiale Vorspannkraft zueinander verdreht angeordnet sind.

Auf ein Gehäuse kann bei der Spindelmutter dadurch verzichtet werden, daß die Spindelmutter ausschließlich aus den Wälzringeinheiten und zumindest einem die Außenringe der Wälzringeinheiten miteinander verbindenden Querstück besteht.

Der Spindeltrieb eignet sich zum übertragen besonders hoher, axialer Kräfte, wenn gemäß einer weiteren Ausgestaltung der Erfindung symmetrisch zu einer radial durch die Spindel führenden Linie auf einer Seite der Spindel vier Wälzringeinheiten eingreifen, die im gleichen Abstand zueinander angeordnet sind, und wenn auf der gegenüberliegenden Seite in der gleichen Wirkungsebene beidseitig der radialen Linie in gleichem Abstand von ihr jeweils zwei weitere Wälzringeinheiten eingreifen.

Zu einer sehr hohen Vergleichmäßigung der Kraftbeanspruchung der Wälzringe bei einem Spindeltrieb mit einer größeren Anzahl von Wälzringeinheiten kommt es, wenn die benachbarten Wälzringeinheiten einer Eingriffsseite auf der Eingriffsseite über jeweils einen Waagebalken am Gehäuse der Spindelmutter abgestützt sind.

Die radiale Vorspannung der einzelnen Wälzringeinheiten kann ohne Beeinflussung der anderen Wälzringeinheiten eingestellt werden, wenn jede Wälzringeinheit an zumindest einer quer zur Gewindespindel auf der Spindelmutter angebrachten Federbrücke befestigt ist.

Die Erfindung läßt zahlreiche Ausführungsformen zu. Zu ihrer weiteren Verdeutlichung sind mehrere davon in der Zeichnung dargestellt und werden nachfolgend beschrieben. In ihr zeigen die

Fig. 1      einen Längsschnitt durch eine erste Ausführungsform eines Spindeltriebs mit drei Wälzringeinheiten,

Fig. 2      eine Seitenansicht des Spindeltriebs nach Figur 1,

Fig. 3      eine Draufsicht auf den Spindeltrieb nach den Figuren 1 und 2,

Fig. 4      einen Längsschnitt durch eine zweite Ausführungsform eines Spindeltriebs mit drei Wälzringeinheiten,

Fig. 5      eine Draufsicht auf den Spindeltrieb nach Figur 4,

Fig. 6      einen Längsschnitt durch einen erfindungsgemäßen Spindeltrieb mit vier Wälzringeinheiten,

Fig. 7      eine Draufsicht auf den Spindeltrieb nach Figur 6,

Fig. 8      eine Einzelheit im Bereich einer Wälzringeinheit,

Fig. 9      einen Längsschnitt durch eine weitere Ausführungsform eines Spindeltriebs mit vier Wälzringeinheiten,

Fig. 10      eine Seitenansicht des Spindeltriebs nach Figur 9,

Fig. 11      eine Draufsicht auf den Spindeltrieb nach den Figuren 9 und 10,

Fig. 12      einen Längsschnitt durch eine weitere Ausführungsform eines Spindeltriebs mit vier Wälzringeinheiten,

Fig. 13      eine Seitenansicht des Spindeltriebs nach Figur 12,

Fig. 14      eine Draufsicht auf den Spindeltrieb nach den Figuren 12 und 13,

Fig. 15      einen Längsschnitt durch einen Spindeltrieb mit insgesamt acht Wälzringeinheiten,

Fig. 16      eine Draufsicht auf den Spindeltrieb nach Figur 15.

Fig. 17      eine Seitenansicht einer weiteren Ausführungsform eines erfindungsgemäßen Spindeltriebs.

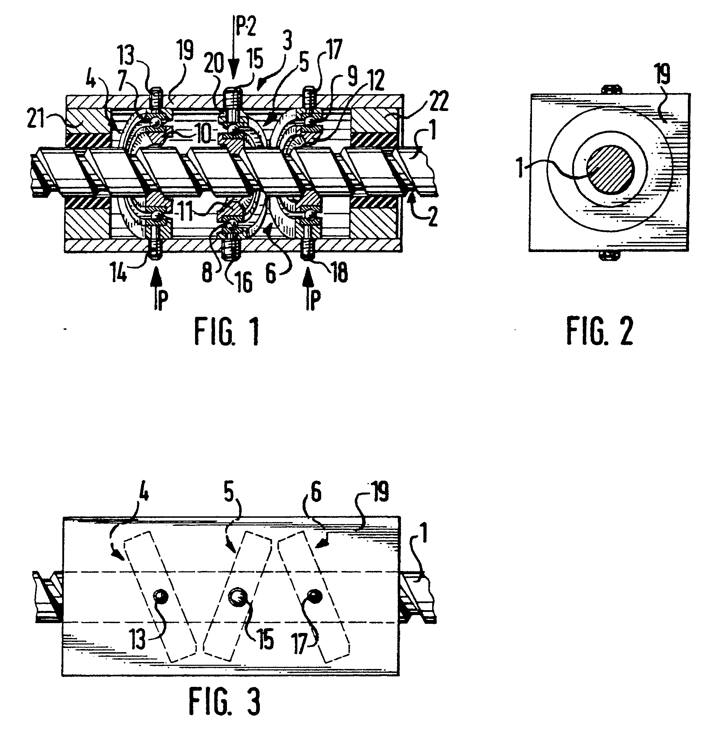

In Figur 1 ist ein Teilstück einer Gewindespindel 1 mit einem Spindelgewinde 2 dargestellt. Auf dieser Gewindespindel 1 ist eine Spindelmutter 3 angeordnet, die mit insgesamt drei exzentrisch zur Gewindespindel angeordneten Wälzringeinheiten 4, 5, 6 in das Spindelgewinde eingreifen. Jede Wälzringeinheit 4, 5, 6 hat ein Wälzlager 7, 8, 9 und einen Tragring 10, 11, 12. Diese Tragringe 10, 11, 12 sind nach innen hin entsprechend dem Spindelgewinde 2 gestaltet. Die beiden äußeren Wälzringeinheiten 4 und 6 sind gegenüber der Längsachse der Gewindespindel 1 geringfügig nach oben hin versetzt, so daß sie mit ihren Tragringen 10, 12 jeweils von unten her mit Spitzenspiel in das Spindelgewinde 2 eingreifen. Hierzu im Gegensatz ist die mittlere Wälzringeinheit 5 zur Längsachse der Gewindespindel 1 nach unten hin versetzt und greift dadurch mit ihrem Tragring 11 mit Spitzenspiel von oben her in das Spindelgewinde 2 ein. Dabei liegen die Eingriffe der Tragringe 10, 11, 12 in einer gemeinsamen, in Längsrichtung der Gewindespindel 1 verlaufenden Eingriffsebene.

Die einzelnen Wälzringeinheiten 4, 5, 6 sind jeweils durch zwei zueinander gegenüberliegende Zapfen 13, 14; 15, 16; 17, 18 in einem Gehäuse 19 der Spindelmutter 3 gehalten. Dadurch können die Wälzringeinheiten 4, 5, 6 entsprechend der Steigung des Spindelgewindes 2 schräggestellt werden. Auf dem Zapfen 15 der mittleren Wälzringeinheit 5 sitzt innerhalb des Gehäuses 19 eine als Tellerfeder ausgebildete Feder 20, welche die mittlere Wälzringeinheit 5 in der Zeichnung gesehen nach unten und damit in das Spindelgewinde 2 vorspannt. Die Gegenkraft zu der von der Feder 20 erzeugten radialen Vorspannkraft wird ausschließlich von den äußeren Wälzringeinheiten 4 und 6 aufgebracht. Diese sollen gleichen Abstand von der mittleren Wälzringeinheit 5 haben. Dadurch ergibt es sich, daß bei einer Vorspannkraft von 2P an der mittleren Wälzringeinheit 5 die Vorspannkraft an den äußeren Wälzringeinheiten 4, 6 jeweils P beträgt, was in der Figur eingetragen wurde. Die Kräfte und Momente gleichen sich dadurch aus.

Die Figur 1 läßt weiterhin erkennen, daß das Gehäuse 19 an beiden Stirnseiten Abschlußstücke 21, 22 hat, welche jedoch nicht die Funktion von Halslagern haben, sondern nur Dichtelemente darstellen. Durch diese Abschlußstücke 21, 22 ergibt sich die Möglichkeit, das Gehäuse 19 mit einem zähflüssigen Schmierfett zu füllen.

Die Figur 2 läßt erkennen, daß das Gehäuse 19 quadratischen Querschnitt hat.

Figur 3 verdeutlicht die durch die Steigung des Spindelgewindes 2 bedingte Schrägstellung der Wälzringeinheiten 4, 5, 6, wobei die beiden äußeren Wälzringeinheiten 4, 6 entgegengesetzt zur mittleren Wälzringeinheit 5 schräggestellt sind, da sie auf der anderen Seite in das Spindelgewinde 2 eingreifen als die mittlere Wälzringeinheit 5.

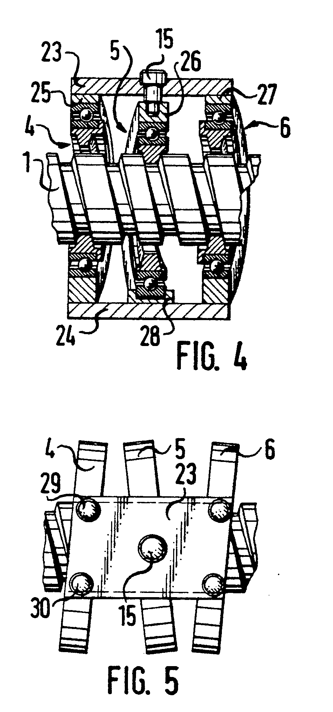

Die Ausführungsform gemäß den Figuren 4 und 5 unterscheidet sich von der vorangegangenen dadurch, daß statt eines starren Gehäuses zwei Längsstücke 23, 24 vorgesehen sind, von denen zumindest eines aus Federstahl besteht. Diese Längsstücke 23, 24 verbinden an gegenüberliegenden Seiten die Außenringe 25, 26, 27 miteinander.

Dabei ist die mittlere Wälzringeinheit 5 wiederum mittels des Zapfens 15 in einer der Gewindesteigung entsprechenden Schräglage selbsteinstellend gehalten. Am dem Längsstück 23 gegenüberliegenden Längsstück 24 ist die Wälzringeinheit 5 in einer leicht balligen Nut einer Halterung 28 gehalten, so daß die gewünschte Selbsteinstellung möglich ist.

Die radiale Vorspannkraft der Wälzringeinheiten 4, 5, 6 ergibt sich bei dieser Ausführungsform durch die Federkraft der Längsstücke 23, 24 oder eines Längsstückes 23. Sie kann eingestellt werden, wenn man den Zapfen 15 verstellbar ausführt, so daß er die mittlere Wälzringeinheit 5 mehr oder weniger radial zur Gewindespindel 1 verschiebt.

Die Figur 5 zeigt, daß die beiden äußeren Wälzringeinheiten 4, 6 am Längsstück 23 und entsprechend auch am gegenüberliegenden Längsstück 24 jeweils mit zwei Schrauben 29, 30 befestigt sind. Dadurch sind diese Wälzringeinheiten 4, 6 unbeweglich mit den Längsstücken 23, 24 verbunden.

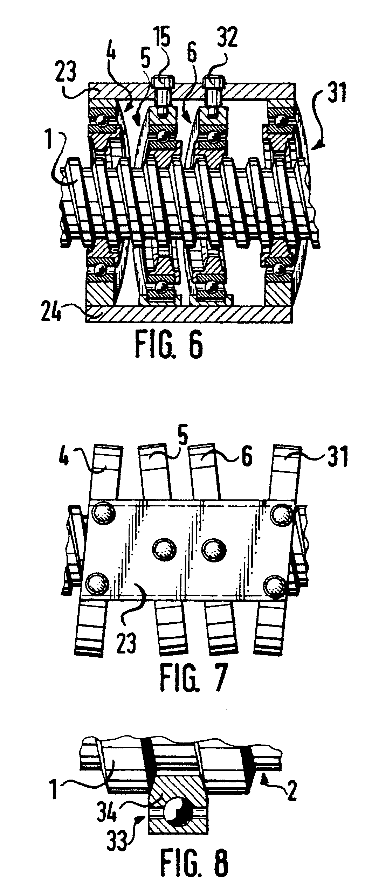

Die Ausführungsform gemäß den Figuren 6 und 7 entspricht grundsätzlich der nach den Figuren 4 und 5. Sie unterscheidet sich nur dadurch von der vorangegangenen Ausführungsform, daß insgesamt vier Wälzringeinheiten 4, 5, 6, 31 vorgesehen sind. Ihre Befestigung an den Längsstücken 23, 24 entspricht genau der gemäß der vorangegangenen Ausführungsform, wobei die beiden mittleren Wälzringeinheiten 5, 6 durch die Zapfen 15, 32 selbsteinstellend im Längsstück 23 gehalten sind.

Die Figur 8 zeigt eine besondere Gestaltung eines Wälzlagers 33 für die Wälzringeinheiten 4, 5, 6, 31. Zu sehen ist, daß dieses Wälzringlager 33 einen Innenring 34 hat, der nach innen hin als Tragring ausgebildet ist und deshalb unmittelbar in das Spindelgewinde 2 der Gewindespindel 1 eingreifen kann.

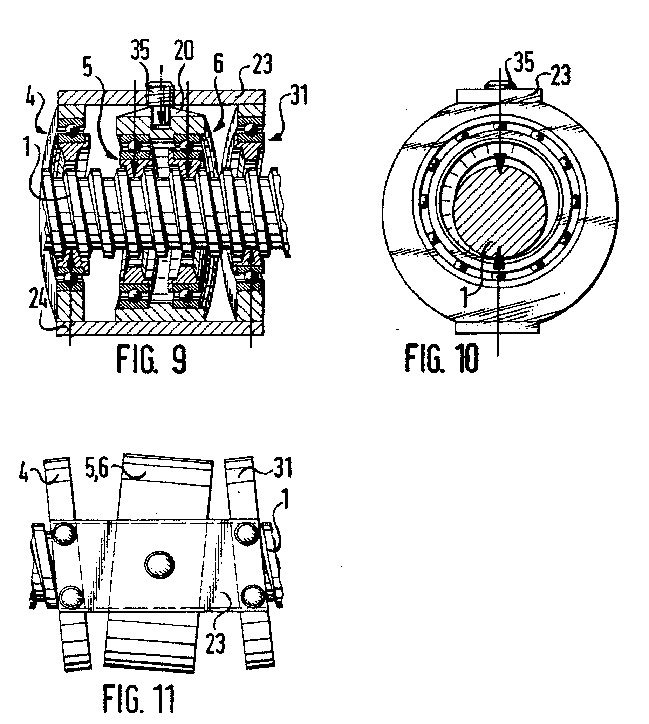

Bei der Ausführungsform gemäß den Figuren 9, 10 und 11 sind die Längsstücke 23, 24 im Gegensatz zu den Längs stücken nach den Figuren 6 und 7 starr ausgebildet. Die radialen Vorspannkräfte ihrer Wälzringeinheiten 4, 5, 6, 31 wird wie bei dem Ausführungsbeispiel gemäß Figur 1 mittels der Feder 20 erzeugt, die auf einem beiden Wälzringeinheiten 5, 6 gemeinsamen Gewindezapfen 35 unterhalb des Längsstückes 23 sitzt und die Wälzringeinheiten 5, 6 dadurch in der Zeichnung gesehen nach unten vorspannt. Durch mehr oder weniger tiefes Einschrauben des Gewindezapfens 35 in das Längsstück 23 kann diese Vorspannkraft eingestellt werden. Sie muß so groß sein, daß die auf die Gewindespindel 1 wirkenden axialen Kräfte die Wälzringeinheiten 4, 5, 6, 31 nicht radial aus dem Spindelgewinde 2 herausdrücken können.

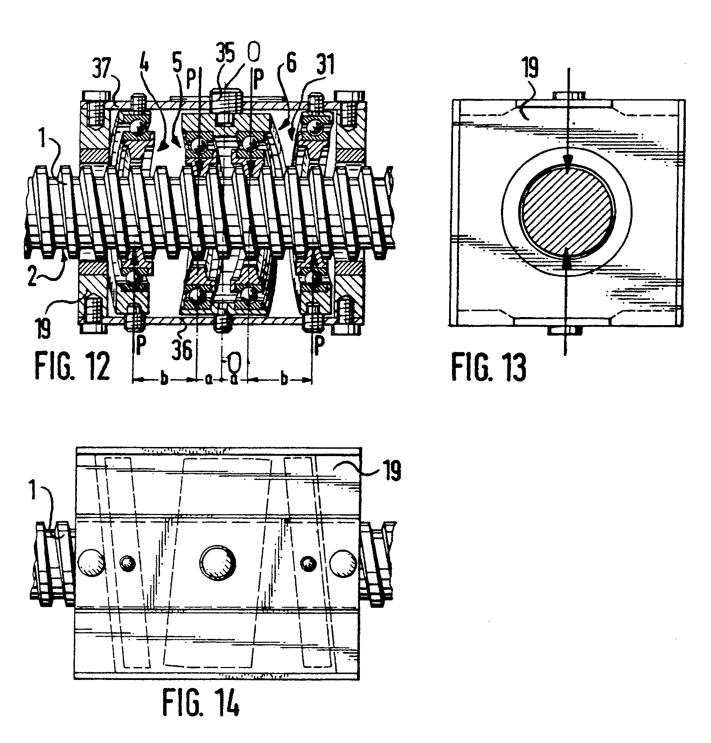

Bei der Ausführungsform gemäß den Figuren 12, 13 und 14 ist wiederum ein starres Gehäuse 19 vorgesehen, welches die Wälzringeinheiten 4, 5, 6, 31 haltert. Die obere und untere Wand des Gehäuses 19 hat im mittleren Bereich jeweils eine Blattfeder 36, 37, zwischen denen die Wälzringeinheiten 4, 5, 6, 31 befestigt sind. Genau wie bei der vorangegangenen Ausführungsform kann der Gewindezapfen 35 der beiden mittleren Wälzringeinheiten 4, 5 verstellbar sein, um die radiale Vorspannkraft aller Wälzringeinheiten einstellen zu können.

Diese Gleichheit aller vier dem Betrage nach übereinstimmend gleichen Vorspannkräfte P und dazu eine minimale Baulänge des Systems bedingt die in Figur 12 eingetragenen Abstandsmaße der Wälzringeinheiten 4, 5, 6, 31 von der vertikalen Symmetrale 0 - 0:

Für die oben eingreifenden, inneren Wälzringeinheiten:

$$a = n_{min} \cdot h$$

und für die von unten eingreifenden, äußeren Wälzringeinheiten:

$$b = (m_{min} + 0,5) \cdot h,$$

wobei h die Steigung des Spindelgewindes ist. $n_{min}$ und $m_{min}$ sind die kleinsten natürlichen Zahlen, die unter Berücksichtigung der Steigung und der Breite der Wälzringeinheiten die konstruktive Bauform realisieren. Aus diesen beiden Formeln folgt zwangsläufig, daß die Kräfte in einer Ebene liegen.

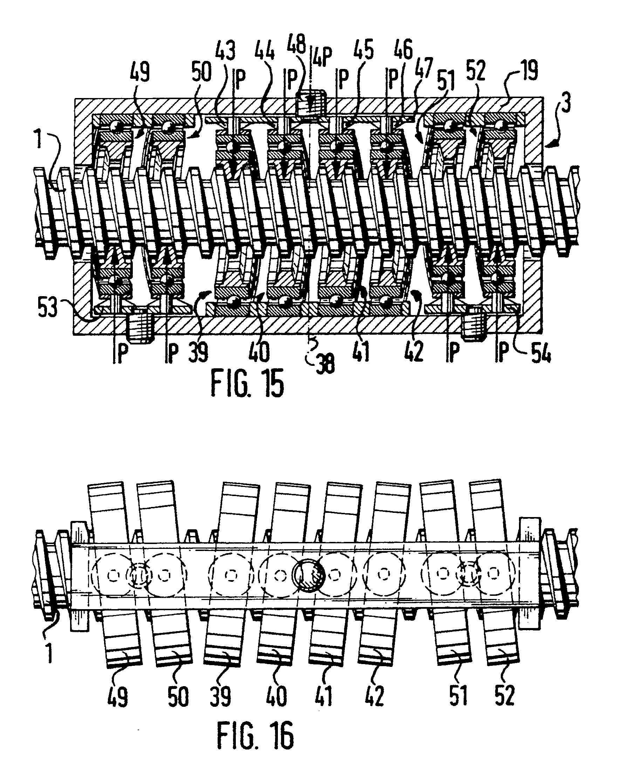

Die Figuren 15 und 16 zeigen einen Spindeltrieb, der zum Übertragen besonders hoher axialer Kräfte geeignet ist. Er hat symmetrisch zu einer quer zur Gewindespindel 1 verlaufenden Linie 38 insgesamt vier Wälzringeinheiten 39, 40, 41 und 42, welche sich unter Zwischenschaltung von jeweils einer als Tellerfeder ausgebildeten Feder 43, 44, 45, 46 an einem Waagebalken 47 abstützen, der seinerseits mit einem Zapfen 48 im Gehäuse 19 der Spindelmutter 3 gehalten ist.

Zu beiden Seiten der Wälzringeinheiten 39, 40, 41, 42 sind jeweils im gleichen Abstand zur Linie 38 zwei weitere Wälzringeinheiten 49, 50, 51, 52 vorgesehen. Diese Wälzringeinheiten 49, 50, 51, 52 erzeugen die Gegenkräfte zu den Wälzringeinheiten 39, 40, 41, 42 und werden alle gleich belastet, was durch Pfeile P gekennzeichnet wurde. Die zwei Wälzringeinheiten 49, 50 und 51, 52 sind auf der Seite ihres jeweiligen Eingriffs ebenfalls über einen Waagebalken 53, 54 am Gehäuse 19 abgestützt.

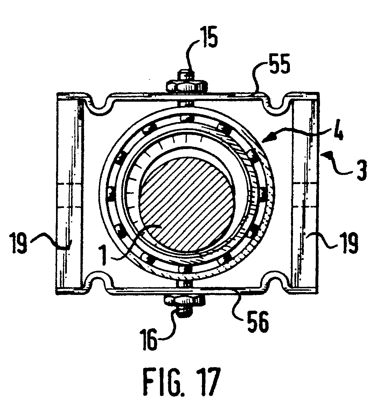

Die Figur 17 zeigt am Beispiel einer Wälzringeinheit 4 eine gegenüber den vorangegangenen Ausführungsformen abweichende Art der Befestigung der Wälzringeinheiten in der Spindelmutter 3. Zu erkennen ist, daß die Wälzringeinheit 4 mit ihren Zapfen 15, 16 jeweils auf einer Federbrücke 55, 56 gehalten ist, die quer zur Gewindespindel 1 verläuft. Jede Federbrücke 55, 56 welche zu beiden Seiten der Gewindespindel 1 auf das Gehäuse 19 der Spindelmutter 3 geschraubt ist, haltert nur eine Wälzringeinheit 4. Dadurch können die radialen Vorspannungen der einzelnen Wälzringeinheiten einer Spindelmutter 3 völlig unabhängig voneinander verstellt werden.

Auflistung der verwendeten Bezugszeichen

| | |
|---|---|
| 1 | Gewindespindel |
| 2 | Spindelgewinde |
| 3 | Spindelmutter |
| 4 | Wälzringeinheit |
| 5 | Wälzringeinheit |
| 6 | Wälzringeinheit |
| 7 | Wälzlager |
| 8 | Wälzlager |
| 9 | Wälzlager |
| 10 | Tragring |
| 11 | Tragring |
| 12 | Tragring |
| 13 | Zapfen |
| 14 | Zapfen |
| 15 | Zapfen |
| 16 | Zapfen |
| 17 | Zapfen |
| 18 | Zapfen |
| 19 | Gehäuse |
| 20 | Feder |
| 21 | Abschlußstück |
| 22 | Abschlußstück |
| 23 | Längsstück |
| 24 | Längsstück |
| 25 | Außenring |
| 26 | Außenring |
| 27 | Außenring |
| 28 | Halterung |
| 29 | Schraube |
| 30 | Schraube |
| 31 | Wälzringeinheit |
| 32 | Zapfen |
| 33 | Wälzlager |
| 34 | Innenring |
| 35 | Gewindezapfen |
| 36 | Blattfeder |
| 37 | Blattfeder |
| 38 | Linie |
| 39 | Wälzringeinheit |
| 40 | Wälzringeinheit |
| 41 | Wälzringeinheit |
| 42 | Wälzringeinheit |
| 43 | Feder |
| 44 | Feder |
| 45 | Feder |
| 46 | Feder |
| 47 | Waagebalken |
| 48 | Zapfen |
| 49 | Wälzringeinheit |
| 50 | Wälzringeinheit |
| 51 | Wälzringeinheit |
| 52 | Wälzringeinheit |
| 53 | Waagebalken |
| 54 | Waagebalken |
| 55 | Federbrücke |
| 56 | Federbrücke |

**Patentansprüche**

1. Spindeltrieb mit einer Gewindespindel und zumindest drei die Spindel (1) exzentrisch umgebenden, eine Spindelmutter (3) bildende Wälzringeinheiten (4, 5, 6, 31, 39 - 42, 49 - 52), die sich unter einseitigem Eingriff in das Spindelgewinde (2) an diesem abwälzen und mit einem inneren Tragring (10, 11, 12) eines Wälzlagers (7, 8, 9) einteilig ausgebildet oder verbunden sind und bei der die Außenringe der Wälzlager (7, 8, 9) der einzelnen Wälzringeinheiten (4, 5, 6) eine gegenseitige Verbindung aufweisen und in Axialrichtung unverschiebbar durch ein Längsglied (23, 24) miteinander verbunden sind und der Eingriff der Wälzringeinheiten (4, 5, 6) in den Gewindegang (2) jeweils durch einen einzigen, geschlossenen, torusähnlichen Tragring (10, 11, 12) mit einer dem Spindelgewindeprofil entsprechenden Querschnittsform erfolgt und die Spindelmutter (3) ausschließlich über diese Eingriffe der Wälzringeinheiten (4, 5, 6) an der Gewindespindel (1) abgestützt ist, dadurch gekennzeichnet, daß die Eingriffe der Wälzringeinheiten (4, 5, 6) in das Spindelgewinde (2) innerhalb einer in Längsrichtung der Gewindespindel (1) liegenden, gemeinsamen Wirkungsebene liegen, wobei zumindest eine Wälzringeinheit (5) einen Eingriff hat, der zu den Eingriffen der anderen Wälzringeinheiten (4, 6) 180 Grad gegenüberliegt.

2. Spindeltrieb nach Anspruch 1, dadurch gekennzeichnet, daß insgesamt vier Wälzringeinheiten (4, 5, 6, 31) vorgesehen sind, von denen die beiden mittleren Wälzringeinheiten (5, 6) auf einer Seite der Gewindespindel (1) und die beiden äußeren Wälzringeinheiten (4, 31) auf der gegenüberliegenden Seite der Gewindespindel (1) in das Spindelgewinde (2) eingreifen.

3. Spindeltrieb nach einem oder mehreren der vorangehenden Ansprüche, dadurch gekennzeichnet, daß zur Erzeugung der Einpreßkraft der Wälzringeinheiten (4, 5, 6) eine Feder (20) vorgesehen ist, welche sich einerseits auf der mittleren Wälzringeinheit (5) oder den mittleren Wälzringeinheiten, andererseits gegen die Verbindung (Gehäuse 19) der Außenringe aller Wälzringeinheiten (4, 5, 6) abstützt.

4. Spindeltrieb nach einem oder mehreren der vorangehenden Ansprüche, dadurch gekennzeichnet, daß die Verbindung der Außenringe durch zumindest ein die Wälzringeinheiten (4, 5, 6) mit ihrem jeweiligen Eingriff in das Spindelgewinde (2) einpressenden Längsstück (23, 24) aus gehärtetem Federstahl gebildet ist.

5. Spindeltrieb nach einem oder mehreren der vorangehenden Ansprüche, dadurch gekennzeichnet, daß er mehrere Spindelmuttern (3) gemäß den vorangegangenen Ansprüchen aufweist, welche im Hinblick auf ihre radiale Vorspannkraft zueinander verdreht angeordnet sind.

6. Spindeltrieb nach einem oder mehreren der vorangehenden Ansprüche, dadurch gekennzeichnet, daß die Spindelmutter (3) ausschließlich aus den Wälzringeinheiten (4, 5, 6, 31) und zumindest einem die Außenringe der Wälzringeinheiten (4, 5, 6, 31) miteinander verbindenden Längsstück (23, 24) besteht.

7. Spindeltrieb nach einem oder mehreren der vorangehenden Ansprüche, dadurch gekennzeichnet, daß symmetrisch zu einer radial durch die Gewindespindel (1) führenden Linie (38) auf einer Seite der Gewindespindel (1) vier Wälzringeinheiten (39, 40, 41, 42) eingreifen, die im gleichen Abstand zueinander angeordnet sind und daß auf der gegenüber liegenden Seite in der gleichen Wirkungsebene beidseitig der radialen Linie (38) in gleichem Abstand von ihr jeweils zwei weitere Wälzringeinheiten (49, 50; 51, 52) eingreifen.

8. Spindeltrieb nach Anspruch 7, dadurch gekennzeichnet, daß die benachbarten Wälzringeinheiten (39, 40, 41, 42; 49, 50, 51, 52) einer Eingriffsseite auf der Eingriffsseite über jeweils einen Waagebalken (47; 53, 54) am Gehäuse (19) der Spindelmutter (3) abgestützt sind.

9. Spindeltrieb nach einem oder mehreren der vorangehenden Ansprüche, dadurch gekennzeichnet, daß jede Wälzringeinheit (4) an zumindest einer quer zur Gewindespindel (1) auf der Spindelmutter (3) angebrachten Federbrücke (55, 56) befestigt ist.

## Claims

1. Spindle mechanism with a threaded spindle and at least three annular antifriction units (4, 5, 6, 31, 39-42, 49-52) which eccentrically surround the spindle (1), form a spindle nut (3), roll on the spindle thread (2) with one-sided engagement in the spindle thread and are constructed integrally with or are connected to an inner carrying race (10, 11, 12) of an antifriction bearing (7, 8, 9) and in which the outer races of the antifriction bearings (7, 8, 9) of the individual annnular antifriction units (4, 5, 6) have a mutual connection and are connected to one another axially unmovably by a longitudinal element (23, 24) and the engagement of the annular antifriction units (4, 5, 6) in the flight (2) is produced in each case by a single, closed, torus-like carrying race (10, 11, 12) with a cross-sectional shape corresponding to the spindle thread profile and the spindle nut (3) is supported on the threaded spindle (1) solely by these engagements of the annular antifriction units (4, 5, 6), characterised in that the engagements of the annular antifriction units (4, 5, 6) in the spindle thread (2) are located within a common plane of action located in the longitudinal direction of the threaded spindle (1), at least one annular antifriction unit (5) having engagement which opposes the engagements of the other annular antifriction units (4, 6) by 180°.

2. Spindle mechanism according to claim 1, characterised in that a total of four annular antifriction units (4, 5, 6, 31) are provided, of which the two central annular antifriction units (5, 6) engage in the spindle thread (2) on one side of the threaded spindle (1) and the two outer annular antifriction units (4, 31) engage in the spindle thread (2) on the opposing side of the threaded spindle (1).

3. Spindle mechanism according to one or more of the preceding claims, characterised in that, for producing the pressing force of the annular antifriction units (4, 5, 6) there is provided a spring (20) which rests, on the one hand, on the central annular antifriction unit (5) or the central annular antifriction units and, on the other hand, against the connection (housing 19) of the outer races of all annular antifriction units (4, 5, 6).

4. Spindle mechanism according to one or more of the preceding claims, characterised in that the connection of the outer races is formed by at least one longitudinal member (23, 24) of hardened spring steel which presses the annular antifriction units (4, 5, 6) with their respective engagement into the spindle thread (2).

5. Spindle mechanism according to one or more of the preceding claims, characterised in that, in accordance with the preceding claims, it has several spindle nuts (3) which are mutually rotated in view of their radial initial tension.

6. Spindle mechanism according to one or more of the preceding claims, characterised in that the spindle nut (3) consists solely of the annular antifriction units (4, 5, 6, 31) and at least one longitudinal member (23, 24) which connects the outer races of the annular antifriction units (4, 5, 6, 31) to one another.

7. Spindle mechanism according to one or more of the preceding claims, characterised in that, symmetrically to a line (38) leading radially through the threaded spindle (1) on one side of the threaded spindle (1) there engage four annular antifriction units (39, 40, 41, 42) which are arranged equidistant from one another and in that two further annular antifriction units (49, 50; 51, 52) engage in each case on the opposing side in the same plane of action on both sides of the radial line (38) equidistantly from it.

8. Spindle mechanism according to claim 7, characterised in that the adjacent annular antifriction units (39, 40, 41, 42; 49, 50, 51, 52) of one engagement side are supported on the engagement side via a respective balance beam (47; 53, 54) on the housing (19) of the spindle nut (3).

9. Spindle mechanism according to one or more of the preceding claims, characterised in that each annular antifriction unit (4) is fastened on at least one spring bridge (55, 56) disposed transversely to the threaded spindle (1) on the spindle nut (3).

**Revendications**

1. Mouvement à vis et à écrou avec une vis ou une broche filetée et au moins trois unités à bagues de roulement (4, 5, 6, 31, 39 - 42, 49 - 52) entourant excentriquement la vis (1), formant un écrou (3), qui avec un engagement unilatéral dans le filetage (2) roulent sur celui-ci et qui sont agencées de manière à faire corps avec une bague de support intérieure (10, 11, 12) d'un roulement (7, 8, 9) ou qui sont assemblées à celle-ci et dans lequel les bagues extérieures des roulements (7, 8, 9) des unités individuelles à bagues de roulement sont réciproquement reliées et sont assemblées ensemble par une pièce longitudinale (23, 24) de manière à être non déplaçables en direction axiale et l'engagement des unités à bagues de roulement (4, 5, 6) dans le filetage (2) a lieu chaque fois au moyen d'une bague de support unique, fermée, torique ayant une forme de section transversale correspondant au profil du filetage et l'écrou (3) prend appui exclusivement au moyen de ces engagements des unités à bagues de roulement (4, 5, 6) sur la vis (1) caractérisé en ce que les engagements des unités à bagues de roulement (4, 5, 6) dans le filetage (2) sont situés dans un plan d'action commun disposé en direction longitudinale de la vis (1), au moins une des unités à bagues de roulement (5) ayant un point d'engagement qui est opposé de 180 degrés aux points d'engagement des autres unités à bagues de roulement (4, 6).

2. Mouvement à vis et à écrou selon la revendication 1 caractérisé en ce que l'on prévoit au total quatre unités à bagues de roulement (4, 5, 6, 31), dont les deux unités à bagues de roulement médianes (5, 6) s'engagent dans le filetage sur l'un des côtés de la vis (1) et les deux unités à bagues de roulement extérieures (4, 31) s'engagent dans le filetage sur le côté opposé de la vis (1).

3. Mouvement à vis et à écrou selon une ou plusieurs des revendications précédentes caractérisé en ce que l'on prévoit, pour l'obtention de la force d'enfoncement des unités à bagues de roulement (4, 5, 6), un ressort (20) qui prend appui d'une part sur l'unité médiane à bagues de roulement (5) ou sur les unités médianes à bagues de roulement, d'autre part sur l'assemblage (logement 19) des bagues extérieures de toutes les unités à bagues de roulement (4, 5, 6).

4. Mouvement à vis et à écrou selon une ou plusieurs des revendications précédentes caractérisé en ce que l'assemblage des bagues extérieures est réalisé par au moins une pièce longitudinale (23, 24) en acier à ressorts durci enfonçant les unités à bagues de roulement (4, 5, 6) avec leur engagement respectif dans le filetage (2).

5. Mouvement à vis et à écrou selon une ou plusieurs des revendications précédentes caractérisé en ce qu'il comporte plusieurs écrous 3 conformes aux revendications précédentes qui sont disposés tournés l'un par rapport à l'autre en ce qui concerne leur précontrainte radiale.

6. Mouvement à vis et à écrou selon une ou plusieurs des revendications précédentes caractérisé en ce que l'écrou (3) est constitué exclusivement des unités à bagues de roulement (4, 5, 6, 31) et d'au moins une pièce longitudinale (23, 24) assemblant ensemble les bagues extérieures des unités à bagues de roulement (4, 5, 6, 31).

7. Mouvement à vis et à écrou selon une ou plusieurs des revendications précédentes caractérisé en ce que, symétriquement à une droite (38) traversant radialement la vis (1), quatre unités à bagues de roulement (39, 40, 41, 42) qui sont disposées avec un intervalle égal l'une par rapport à l'autre, s'engagent sur l'un des côtés de la vis (1) et sur le côté opposé dans le même plan d'action, des deux côtés de la droite radiale (38) à une distance égale par rapport à celle-ci s'engagent chaque fois deux autres unités à bagues de roulement (49, 50; 51, 52).

8. Mouvement à vis et à écrou selon la revendication 7 caractérisé en ce que les unités voisines à bagues de roulement (39, 40, 41, 42; 49, 50, 51, 52) d'un côté d'engagement prennent appui sur le côté d'engagement par l'intermédiaire de chaque fois un fléau de balance (47; 53, 54) sur le logement (19) de l'écrou (3).

9. Mouvement à vis et à écrou selon une ou plusieurs des revendications précédentes caractérisé en ce que chacune des unités à bagues de roulement (4) est fixée à au moins un pont à ressort (55, 56) monté sur l'écrou (3) transversalement à la vis (1).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

EP 0 247 417 B1

FIG. 15

FIG. 16

14

FIG. 17